# EUROPÄISCHE PATENTSCHRIFT

(11) **EP 1 927 481 B1**
(45) Veröffentlichungstag und Bekanntmachung des Hinweises auf die Patenterteilung: **21.10.2009**
(21) Anmeldenummer: 07021177.6
(22) Anmeldetag: 30.10.2007
(51) Int. Cl.: B60C 23/04, B60R 11/00

(54) **Bauteilhalterung**
Component holder
Support de composant

(30) Priorität: 01.12.2006 DE 102006057164
(43) Veröffentlichungstag der Anmeldung: 04.06.2008
(73) Patentinhaber: Dr. Ing. h.c. F. Porsche Aktiengesellschaft, 70435 Stuttgart (DE)
(72) Erfinder: Baum, Michael, 75233 Tiefenbronn-Lehningen (DE); Wörner, Thomas, 70499 Stuttgart (DE)

(56) Entgegenhaltungen:
- EP-A- 1 683 657
- DE-A1-102004 037 956
- DE-C1- 19 622 308
- DE-U1- 20 019 524

## Beschreibung

Die vorliegende Erfindung betrifft eine Halterung für ein Bauteil an einem Kraftfahrzeug nach dem Oberbegriff des Anspruchs 1.

An Kraftfahrzeugen sind eine Vielzahl von Bauteilen zu haltern, also zu befestigen. Dabei kann es sich um elektrische und/oder elektronische Bauteile handeln, wie z.B. Steuergeräte und Sensoren. Bekannt sind insbesondere auch Reifendruck-Kontrolleinrichtungen, die im jeweiligen Fahrzeugreifen einen Drucksensor aufweisen, der drahtlos mit einer Transpondereinheit kommuniziert, die in der Nähe des jeweiligen Drucksensors am Fahrzeug anzubringen ist. Diese Transpondereinheit ist ihrerseits mit einem entsprechenden Steuergerät der Reifendruck-Kontrolleinrichtung verbunden, um die Signale der Drucksensoren auszuwerten. Die Transpondereinheit umfasst beispielsweise eine Antenne sowie eine Sende- und Empfangseinheit, um die Messdaten vom jeweiligen Sensor abzurufen. Eine derartige Transpondereinheit kann ebenfalls ein Bauteil im vorstehend genannten Sinne bilden, das mittels einer eingangs genannten Halterung am Fahrzeug befestigt ist. Für Reparatur- und Wartungszwecke kann es vorteilhaft sein, derartige Bauteile, insbesondere eine solche Transpondereinheit, so am Fahrzeug zu befestigen, dass sie einfach montierbar und demontierbar sind.

Eine gattungsgemäße Halterung ist aus der DE 10 2004 037 956 A1 bekannt.

Die vorliegende Erfindung beschäftigt sich mit dem Problem, für eine Halterung der eingangs genannten Art eine verbesserte Ausführungsform anzugeben, die sich insbesondere durch eine vereinfacht Montage und Demontage des jeweiligen Bauteils auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, das jeweilige Bauteil mit Hilfe von zwei separaten Halteelementen am Fahrzeug zu befestigen, wobei das eine Halteelement, im folgenden das erste Halteelement, erste Rastelemente aufweist, die mit dazu komplementären ersten Gegenrastelementen des Bauteils senkrecht zu einem ebenen Haltebereich des Fahrzeugs zusammenwirken, während das andere Halteelement, im folgenden das zweite Halteelement, zweite Rastelemente aufweist, die mit dazu komplementären zweiten Gegenrastelementen des Bauteils parallel zur Haltebereichsebene zusammenwirken. Hierdurch wird eine Verrastung des Bauteils am Fahrzeug in zwei zueinander senkrechten Richtungen erzeugt, wodurch die Halterung besonders sicher arbeitet und eine zuverlässige Fixierung des Bauteils am Fahrzeug gewährleistet.

Darüber hinaus ist das zweite Halteelement mit einer Aufnahmeöffnung ausgestattet, in die ein vorstehender Bereich des Bauteils parallel zur Haltebereichsebene einsteckbar ist. Hierdurch ergibt sich im Bereich des zweiten Halteelements außerdem eine formschlüssige Sicherung senkrecht zur Haltebereichsebene zwischen dem Bauteil und dem zweiten Halteelement und somit zwischen dem Bauteil und dem Fahrzeug.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
Fig. 1 eine auseinandergezogene Darstellung einer Halterung mit einem Bauteil,
Fig. 2 eine auseinandergezogene Darstellung mit einer Abdeckung,
Fig. 3 eine Ansicht im montierten Zustand mit Abdeckung.

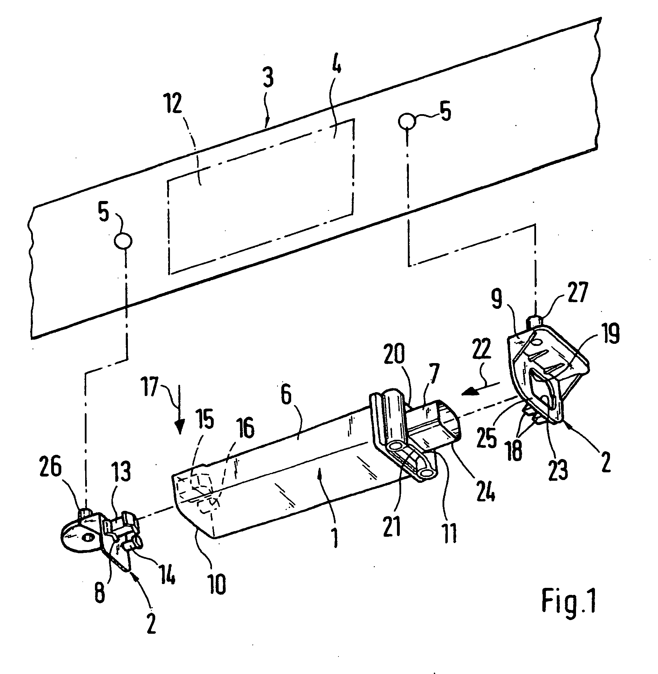

Entsprechend Fig. 1 soll ein Bauteil 1 mit Hilfe einer Halterung 2 an einem nur teilweise dargestellten Kraftfahrzeug 3 befestigt werden. Hierzu ist am Kraftfahrzeug 3 ein im wesentlichen ebener Haltebereich 4 vorgesehen, der bereits mit Montageöffnungen 5 vorbereitet sein kann, mit denen die Halterung 2 zur Fixierung des Bauteils 1 am Fahrzeug 3 zusammenwirkt. Beim Bauteil 1 kann es sich grundsätzlich um jedes beliebige Bauteil 1 handeln. Vorzugsweise handelt es sich jedoch um ein elektrisches und/oder elektronisches Bauteil 1. Insbesondere kann es sich beim Bauteil 1 um eine Transpondereinheit einer Reifendruck-Kontrolleinrichtung handeln. Diese Transpondereinheit ist dazu ausgestaltet, dass sie einerseits drahtlos mit zumindest einem Drucksensor kommunizieren kann, der im jeweiligen Reifen angeordnet ist. Andererseits ist die Transpondereinheit mit einem entsprechenden Steuergerät der Reifendruck-Kontrolleinrichtung verbunden und kann diesem die Messsignale des Drucksensors übermitteln. Die Transpondereinheit umfasst hierzu eine Sende- und/oder Empfangseinheit sowie eine Antenne, wobei die einzelnen elektrischen bzw. elektronischen Komponenten in einem entsprechenden Gehäuse 6 des Bauteils 1 untergebracht sind. Über einen elektrischen Anschluss 7 ist das elektrische Bauteil 1 in das elektrische Bordnetz des Fahrzeugs 3 eingebunden. Insbesondere ist die Transpondereinheit über den elektrischen Anschluss 7 mit dem Steuergerät der Reifendruck-Kontrolleinrichtung verbunden.

Die Halterung 2 weist zwei Halteelemente, nämlich ein erstes Halteelement 8 und ein zweites Halteelement 9 auf. Das erste Halteelement 8 ist einer ersten Stirnseite 10 des Bauteils 1 zugeordnet, während das zweite Halteelement 9 einer zweiten Stirnseite 11 des Bauteils 1 zugeordnet ist, die von der ersten Stirnseite 10 entfernt ist.

Der Haltebereich 4 ist wie erläutert im wesentliche eben ausgestaltet, d.h., er erstreckt sich im wesentlichen in einer Ebene 12, die hier durch strichpunktierte Linien, die ein in der Haltebereichsebene 12 liegendes Rechteck symbolisieren, angedeutet ist.

Das erste Halteelement 8 weist erste Rastelemente 13, 14 auf, die so ausgestaltet sind, dass sie senkrecht zur Haltebereichsebene 12 wirken. Das Bauteil 1 weist, insbesondere an seinem Gehäuse 6, erste Gegenrastelemente 15, 16 auf, die hier nur schematisiert wiedergegeben sind. Die ersten Gegenrastelemente 15, 16 sind komplementär zu den ersten Rastelementen 13, 14 ausgestaltet und sind an der ersten Stirnseite 10 ausgebildet. Sie befinden sich dabei in Fig. 1 an einer vom Betrachter abgewandten Unterseite des Bauteils 1 bzw. des Gehäuses 6. Die ersten Rastelemente 13, 14 und die ersten Gegenrastelemente 15, 16 sind so ausgestaltet, dass sie senkrecht zur Haltebereichsebene 12 miteinander zusammenwirken. Das bedeutet, dass die ersten Rastelemente 13, 14 und die ersten Gegenrastelemente 15, 16 in einer durch einen Pfeil angedeuteten ersten Rastrichtung 17 aufeinander zu bewegt werden, wenn sie miteinander verrasten sollen. Dabei erstreckt sich diese erste Rastrichtung 17 senkrecht zur Haltebereichsebene 12.

Im Unterschied dazu weist das zweite Halteelement 9 zweite Rastelemente 18, 19 auf, die so ausgestaltet sind, dass sie parallel zur Haltebereichsebene 12 wirken. Komplementär dazu sind an der zweiten Stirnseite 11 zweite Gegenrastelemente 20, 21 an der zweiten Stirnseite 11 des Bauteils 1 ausgebildet. Die zweiten Rastelemente 18, 19 und die zweiten Gegenrastelemente 20, 21 sind dabei so aufeinander abgestimmt, dass sie parallel zur Haltebereichsebene 12 zusammenwirken. Das bedeutet, dass die zweiten Rastelemente 18, 19 relativ zu den zweiten Gegenrastelementen 20, 21 entsprechend einer durch einen Pfeil symbolisierten zweiten Rastrichtung 22, die parallel zur Haltebereichsebene 12 verläuft, aufeinander zu bewegt werden, um die zweiten Rastelemente 18, 19 mit den zweiten Gegenrastelementen 20, 21 zu verrasten.

Ferner weist das zweite Halteelement 9 eine Aufnahmeöffnung 23 auf, die so ausgestaltet ist, dass darin ein parallel zu einer Längsrichtung des Bauteils 1, die durch die Abstandsrichtung der beiden Stirnseiten 10, 11 definiert ist, vorstehender Bereich 24 des Bauteils 1 einsteckbar ist. Besagter vorstehender Bereich 24 ist hier durch den Buchsenkörper des elektrischen Anschlusses 7 gebildet. Im montierten Zustand durchsetzt der vorstehende Bereich 24 die Aufnahmeöffnung 23, derart, dass ein Öffnungsrand 25 der Aufnahmeöffnung 23 den vorstehenden Bauteilbereich 24 zumindest an einer vom Haltebereich 12 entfernten oder abgewandten Seite umgreift. Im gezeigten Beispiel ist die Aufnahmeöffnung 23 allseitig vom Öffnungsrand 25 umschlossen, so dass der Öffnungsrand 25 im montierten Zustand auch den vorstehenden Bauteilbereich 24 geschlossen umschließt.

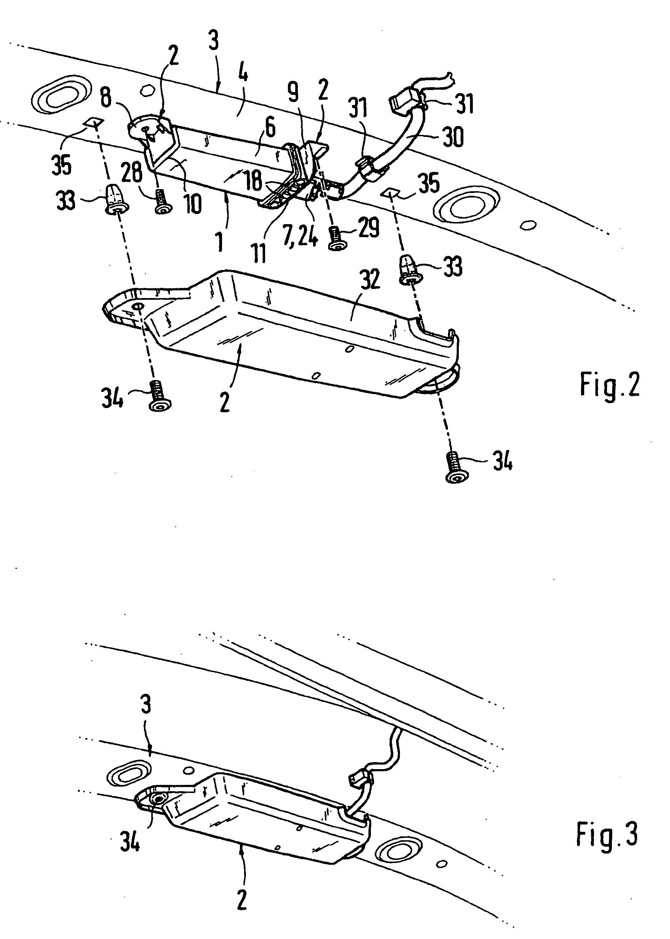

Zur Montage des Bauteils 1 am Fahrzeug 3 ist es grundsätzlich möglich, zunächst die einzelnen separaten Halteelemente 8, 9 jeweils an der jeweiligen Stirnseite 10, 11 des Bauteils 1 anzubringen. Hierzu lassen sich die Halteelemente 8, 9 mit ihren Rastelementen 13, 14, 18, 19 entsprechend ihren Rastrichtungen 17, 22 einfach mit den komplementären Gegenrastelementen 17, 18, 20, 21 verrasten. Anschließend kann die so gebildete Baugruppe aus Bauteil 1 und dem daran angebrachten bzw. damit verrasteten Halteelementen 8, 9 am Fahrzeug 3 im Haltebereich 4 befestigt werden. Für die Befestigung am Fahrzeug 3 kann jedes Halteelement 8, 9 beispielsweise mit einem hohlen, spreizbaren Fixierkörper 26 bzw. 27 ausgestattet sein, der senkrecht zur Haltebereichsebene 12 vom jeweiligen Halteelement 8, 9 absteht und der in die im Haltebereich 4 vorbereiteten Öffnungen 5 einsteckbar ist. Ein entsprechender, in Fig. 2 dargestellter Spreizkörper 28, 29, z.B. eine Schraube, wird an einer vom Haltebereich 4 abgewandten Seite in den jeweiligen Fixierkörper 26, 27 koaxial eingebracht, wodurch sich der Fixierkörper 26, 27 aufspreizt und dadurch das jeweilige Halteelement 8, 9 am Fahrzeug 3 festlegt.

Bei einer bevorzugten Ausführungsform sind die Halteelemente 8, 9 aufeinander und auf das Bauteil 1 so abgestimmt, dass es möglich ist, das Bauteil 1 auch dann am Fahrzeug 3 zu montieren und von diesem zu demontieren, wenn die Halteelemente 8, 9 am Fahrzeug 3 montiert sind. Der Montagevorgang kann dann beispielsweise so ablaufen, dass das Bauteil 1 zunächst mit seinem vorstehenden Bauteilbereich 24 in die Aufnahmeöffnung 23 entsprechend der zweiten Rastrichtung 22 eingeführt wird. Dabei können die zweiten Rastelemente 18, 19 zumindest teilweise bereits mit den zweiten Gegenrastelementen 20, 21 verrasten. Anschließend kann das Bauteil 1 um eine Achse, die parallel zur Haltebereichsebene 12 und senkrecht zur zweiten Rastrichtung 22 verläuft, in Richtung Fahrzeug 3 verschwenkt werden, wodurch zwischen dem ersten Halteelement 8 und der ersten Stirnseite 10 die erste Rastrichtung 17 realisiert wird. Dementsprechend können die ersten Halteelemente 13, 14 mit den ersten Gegenrastelementen 15, 16 verrasten. Spätestens jetzt verrasten auch die letzten zweiten Rastelemente 18, 19 mit den zugehörigen zweiten Gegenrastelementen 20, 21. Die Demontage des Bauteils 1 kann dann in entsprechend umgekehrter Reihenfolge ablaufen.

Gemäß der hier gezeigten, bevorzugten Ausführungsform können die Aufnahmeöffnung 23 und der vorstehende Bauteilbereich 24 hinsichtlich ihrer Querschnitte so aufeinander abgestimmt sein, dass der vorstehende Bauteilbereich 24 nur dann parallel zur Haltebereichsebene 12 in die Aufnahmeöffnung 23 einsteckbar ist, wenn das Bauteil 1 richtig positioniert ist, also wenn dessen Unterseite tatsächlich dem Haltebereich 4 zugewandt ist. Hierdurch kann eine versehentliche Falschmontage des Bauteils 1 vermieden werden.

Die ersten Rastelemente 13, 14 und die zugehörigen ersten Gegenrastelemente 15, 16 können so ausgestaltet sein, dass sie einander im verrasteten Zustand parallel zur Haltebereichsebene 12, also senkrecht zur ersten Rastrichtung 17, formschlüssig hintergreifen. Hierdurch ergibt sich eine zusätzliche Fixierungs- und Haltewirkung zwischen dem ersten Halteelement 8 und dem Bauteil 1**.** Für diese Formschlusswirkung können die ersten Rastelemente 13, 14 an ihren freien Enden pilzförmige oder dachförmige Erweiterungen aufweisen, während die ersten Gegenrastelemente 15, 16 dazu komplementäre Hinterschnittkonturen besitzen.

Im Unterschied dazu sind die zweiten Rastelemente 18, 19 beispielsweise durch quer zur zweiten Rastrichtung 22 federnde Rasthaken gebildet, wobei die zweiten Gegenrastelemente 20, 21 durch quer zur zweiten Rasteinrichtung 22 verlaufende, hintergreifbare Rastkanten oder Rastkonturen gebildet sein können.

Gemäß Fig. 2 ist das Bauteil 1 im eingebauten Zustand mit seinen Stirnseiten 10, 11 parallel zur Haltebereichsebene 12 zwischen den beiden Halteelementen 8, 9 angeordnet und durch diese gegen Relativbewegungen in der Längsrichtung des Bauteils 1 gesichert. Fig. 2 zeigt außerdem ein elektrisches Kabel 30, das im Einbauzustand an dem elektrischen Anschluss 7 angeschlossen ist. Besagtes Kabel 30 ist mittels entsprechender Clipsverbinder 31 am Fahrzeug 3 festlegbar.

Entsprechend den Fig. 2 und 3 kann die Halterung 2 ferner mit einer Abdeckung 32 ausgestattet sein, die am Fahrzeug 3 so montierbar ist, dass damit der gesamte Haltebereich 4 mit dem Bauteil 1 und mit den Halteelementen 8, 9 nach außen abdeckbar ist. Hierdurch ist das Bauteil 1 einschließlich der Halterung 2 vor Verunreinigungen geschützt. Ebenso ergibt sich hierdurch ein gewisser Kontaktschutz für geländegängige Fahrzeuge.

Die Abdeckung 32 ist beispielsweise mittels Schrauben 34 am Fahrzeug 3 befestigbar, wobei die Schrauben 34 in Clipselemente 33 eingreifen, die in entsprechende Aufnahmeöffnungen 35 des Fahrzeugs 3 eingesetzt sind.

## Patentansprüche

1. Halterung für ein Bauteil (1) an einem Kraftfahrzeug (3),
- mit zwei unabhängig voneinander, und zueinander beabstandet am Fahrzeug (3) befestigbaren oder befestigten Halteelementen (8,9), nämlich ein erstes Halteelement (8) und ein zweites Halteelement(9), **dadurch gekennzeichnet, dass**
- das erste Halteelement (8) wenigstens ein senkrecht zu einem im wesentlichen ebenen Haltebereich (4) des Fahrzeugs (3) wirkendes erstes Rastelement (13,14) aufweist, das senkrecht zur Ebene (12) des Haltebereichs (4) mit wenigstens einem dazu komplementären ersten Gegenrastelement (15,16) zusammenwirkt, das an einer ersten Stirnseite (10) des Bauteils (1) ausgebildet ist, und
- das zweite Halteelement (9) wenigstens ein parallel zur Ebene (12) des Haltebereichs (4) wirkendes zweites Rastelement (18,19) aufweist, das parallel zur Haltebereichsebene (12) mit wenigstens einem dazu komplementären zweiten Gegenrastelement (20,21) zusammenwirkt, das an einer von der ersten Stirnseite (10) entfernten zweiten Stirnseite (11) des Bauteils (1) ausgebildet ist,
- wobei das zweite Halteelement (9) eine Aufnahmeöffnung (23) aufweist, die von einem dazu komplementären, an der zweiten Stirnseite (11) ausgebildeten, vorstehenden Bereich (24) des Bauteils (1) parallel zur Haltebereichsebene (12) durchsetzt ist,
- wobei ein Öffnungsrand (25) der Aufnahmeöffnung (23) den vorstehenden Bauteilbereich (24) zumindest an einer vom Haltebereich (4) entfernten Seite umgreift.

2. Halterung nach Anspruch 1, **dadurch gekennzeichnet, dass** die Halteelemente (8,9) so aufeinander und auf das Bauteil (1) abgestimmt sind, dass das Bauteil (1) bei fest am Fahrzeug (3) montierten Halteelementen (8,9) an diesen montierbar und von diesen demontierbar ist.

3. Halterung nach Anspruch 1 oder 2, **dadurch gekennzeichnet, dass** die Aufnahmeöffnung (23) und der vorstehende Bauteilbereich (24) so aufeinander abgestimmt sind, dass der Bauteilbereich (24) nur dann in die Aufnahmeöffnung (23) einsteckbar ist, wenn das Bauteil (1) seine bestimmungsgemäße Einbaulage aufweist.

4. Halterung nach einem der Ansprüche 1 bis 3, **dadurch gekennzeichnet, dass** zumindest an einem der Halteelemente (8,9) ein hohler, spreizbarer Fixierkörper (26,27) ausgebildet ist, der im Einbauzustand in eine im Haltebereich (4) ausgebildete Aufnahmeöffnung (5) hineinragt und mittels eines koaxial darin eingebrachten Spreizkörpers (28,29) gespreizt ist.

5. Halterung nach einem der Ansprüche 1 bis 4, **dadurch gekennzeichnet, dass** das wenigstens eine Rastelement (13,14) und das wenigstens eine erste Gegenrastelement (15,16) im verrasteten Zustand einander parallel zur Haltebereichsebene (12) formschlüssig übergreifen.

6. Halterung nach einem der Ansprüche 1 bis 5, **dadurch gekennzeichnet, dass** das Bauteil (1) im Einbauszustand mit seinen Stirnseiten (10,11) zwischen den beiden Halteelementen (8,9) angeordnet ist.

7. Halterung nach einem der Ansprüche 1 bis 6, **dadurch gekennzeichnet, dass** eine am Fahrzeug (3) montierte oder montierbare Abdeckung (32) vorgesehen ist, die den Haltebereich (4) mit dem Bauteil (1) und den Halteelementen (8,9) nach außen abdeckt.

8. Halterung nach einem der Ansprüche 1 bis 7, **dadurch gekennzeichnet, dass** das Bauteil (1) eine Transpondereinheit einer Reifendruck-Kontrolleinrichtung ist, die einerseits mit einem im jeweiligen Reifen angeordneten Drucksensor drahtlos kommuniziert und andererseits mit einem entsprechenden Steuergerät verbunden ist.

## Claims

1. Holder for a component (1) on a motor vehicle (3),
- with two holding elements (8, 9), namely a first holding element (8) and a second holding element (9), which can be fastened or are fastened independently of each other and at a distance from each other to the vehicle (3), **characterized in that**
- the first holding element (8) has at least one first latching element (13, 14) which acts perpendicularly to an essentially planar holding region (4) of the vehicle (3) and interacts perpendicularly to the plane (12) of the holding region (4) with at least one first mating latching element (15, 16) which is complementary thereto and is formed on a first end side (10) of the component (1), and
- the second holding element (9) has at least one second latching element (18, 19), which acts parallel to the plane (12) of the holding region (4) and interacts parallel to the holding region plane (12) with at least one second mating latching element (20, 21) which is complementary thereto and is formed on a second end side (11) of the component (1), which end side is remote from the first end side (10),
- the second holding element (9) having a receiving opening (23) which is passed through parallel to the holding region plane (12) by a protruding region (24), which is complementary thereto and is formed on the second end side (11), of the component (1),
- an opening edge (25) of the receiving opening (23) engaging around the protruding component region (24) at least on a side which is remote from the holding region (4).

2. Holder according to Claim 1, **characterized in that** the holding elements (8, 9) are matched to each other and to the component (1) in such a manner that, with holding elements (8, 9) mounted fixedly on the vehicle (3), the component (1) can be mounted on them and can be removed from them.

3. Holder according to Claim 1 or 2, **characterized in that** the receiving opening (23) and the protruding component region (24) are matched to each other in such a manner that the components region (24) can only be inserted into the receiving opening (23) when the component (1) is in its correct fitted position.

4. Holder according to one of Claims 1 to 3, **characterized in that** a hollow, expandable fixing body (26, 27) is formed at least on one of the holding elements (8, 9), projects, in the fitted state, into a receiving opening (5) formed in the holding region (4) and is expanded by means of an expanding body (28, 29) placed coaxially therein.

5. Holder according to one of Claims 1 to 4, **characterized in that** the at least one latching element (13, 14) and the at least one first mating latching element (15, 16) engage, in the latched state, in a form-fitting manner over each other parallel to the holding region plane (12).

6. Holder according to one of Claims 1 to 5, **characterized in that** the component (1), in the fitted state, is arranged with its end sides (10, 11) between the two holding elements (8, 9).

7. Holder according to one of Claims 1 to 6, **characterized in that** a covering (32) is provided which is mounted or can be mounted on the vehicle (3) and covers the holding region (4) together with the component (1) and the holding elements (8, 9) to the outside.

8. Holder according to one of Claims 1 to 7, **characterized in that** the component (1) is a transponder unit of a tire pressure control system which, firstly, communicates wirelessly with a pressure sensor arranged in the particular tire and, secondly, is connected to a corresponding control device.

## Revendications

1. Support de composant (1) disposé au niveau d'un véhicule automobile (3), avec deux éléments de support (8, 9) indépendants situés à une certaine distance l'un de l'autre et pouvant être fixés ou étant fixés au véhicule (3), notamment un premier élément de support (8) et un deuxième élément de support (9), **caractérisé en ce que** :
le premier élément de support (8) comporte au moins un premier élément de verrouillage (13, 14) agissant perpendiculairement à une zone de support (4) pour l'essentiel plane du véhicule (3), ledit élément de verrouillage interagissant perpendiculairement au plan (12) de la zone de support (4) avec au moins un premier contre-élément de verrouillage (15, 16) complémentaire réalisé au niveau d'une première face frontale (10) du composant (1) ;
le deuxième élément de support (9) comportant au moins un deuxième élément de verrouillage (18, 19) parallèlement au plan (12) de la zone de support (4), ledit élément de verrouillage interagissant parallèlement au plan de la zone de support (12) avec au moins un deuxième contre-élément de verrouillage (20, 21) complémentaire réalisé au niveau d'une deuxième face frontale (11) du composant (1) située à une certaine distance de la première face frontale (10) ;
le deuxième élément de support (9) comportant une ouverture de logement (23) traversée par une zone (24) du composant (1) complémentaire saillante réalisée au niveau de la deuxième face frontale (11), parallèlement au plan de la zone de support (12) ;
un bord d'ouverture (25) de l'ouverture de logement (23) de la zone de composant (24) saillante s'emboîtant au moins sur un côté éloigné de la zone de support (4).

2. Support selon la revendication 1, **caractérisé en ce que** les éléments de support (8, 9) sont ajustés de telle sorte les uns sur les autres et sur le composant (1) que le composant (1) peut en être démonté en présence d'éléments de support (8, 9) montés fixement au véhicule (3).

3. Support selon la revendication 1 ou 2, **caractérisé en ce que** l'ouverture de logement (23) et la zone de composant (24) saillante sont si bien adaptées l'une par rapport à l'autre que la zone de composant (24) ne peut être insérée dans l'ouverture de logement (23) que lorsque le composant (1) se trouve dans sa position de montage déterminée.

4. Support selon l'une quelconque des revendications 1 à 3, **caractérisé en ce qu'**au moins un corps de fixation (26, 27) creux, écartable est réalisé au niveau d'un des éléments de support (8, 9), ledit corps saillant à l'état monté dans une ouverture de logement (5) réalisée dans la zone de support (4) et étant écarté à l'aide d'un corps d'écartement (28, 29) disposé de façon coaxiale à l'intérieur.

5. Support selon l'une quelconque des revendications 1 à 4, **caractérisé en ce que** l'au moins un élément de verrouillage (13, 14) et l'au moins un premier contre-élément de verrouillage (15, 16) se chevauchent par complémentarité de formes à l'état verrouillé parallèlement au plan de la zone de support (12).

6. Support selon l'une quelconque des revendications 1 à 5, **caractérisé en ce que** le composant (1) est disposé à l'état monté avec ses faces frontales (10, 11) entre les deux éléments de support (8, 9).

7. Support selon l'une quelconque des revendications 1 à 6, **caractérisé en ce qu'**un cache (32) monté et montable sur le véhicule (3) est prévu qui recouvre la zone de support (4) avec le composant (1) et les éléments de support (8, 9) sur le côté extérieur.

8. Support selon l'une quelconque des revendications 1 à 7, **caractérisé en ce que** le composant (1) est une unité de transpondeur d'un dispositif de contrôle de pression des pneumatiques qui communique sans fil d'un côté avec un capteur de pression disposé dans le pneumatique respectif et est relié de l'autre côté à un appareil de commande correspondant.
